# EUROPÄISCHE PATENTANMELDUNG

(11) **EP 4 404 149 A1**
(43) Veröffentlichungstag der Anmeldung: **24.07.2024**
(21) Anmeldenummer: 24150521.3
(22) Anmeldetag: 05.01.2024
(51) Int. Cl.: G06V 20/00, G06T 7/13

(54) **VERFAHREN ZUM ERMITTELN EINER POSITION EINES ECKBEREICHS EINES ELEKTRODENVERBUNDSTAPELS**

(30) Priorität: 20.01.2023 DE 102023200459
(71) Anmelder: VOLKSWAGEN AG, 38440 Wolfsburg (DE)
(72) Erfinder: Masuch, Steffen, 38118 Braunschweig (DE)

(57) **Zusammenfassung**

Die Erfindung betrifft ein Verfahren zum Ermitteln einer Position von Ecken vieleckiger Elektrodenblättern in mindestens einem Eckbereich eines Elektrodenverbundstapels (ESV), umfassend die Schritte:
- 3D-bildgebendes Aufnehmen des Eckbereichs des Elektrodenverbundstapels (ESV) in einem Aufnahmebereich mittels eines Bildgebungsverfahrens, so dass ein Datensatz erzeugt wird, der eine 3D-Lageinformation der Elektrodenblätter (A, K) in dem Eckbereich des Elektrodenverbundstapels (ESV) relativ zu einem Träger (5, SD, SB) oder einem im Aufnahmebereich angeordneten Marker umfasst,
- Aus dem Datensatz Ermittlung eines ersten und eines zweiten Kantenverlaufs (20x, 20y) der den Eckbereich einrahmenden Kanten (21x, 21y) jedes Elektrodenblatts (A,K), wobei anhand des Kantenverlaufs (20x, 20y) eine Position der Ecke (E1, E2, E3, E4) des jeweiligen Elektrodenblatts (A,K) ermittelt wird.

Die Elektrodenblätter und deren Kanten werden dabei mittels eines neuronalen Netz-Systems ermittelt.

## Beschreibung

Die Erfindung betrifft ein Verfahren zum Ermitteln einer Position eines Eckbereichs eines Elektrodenverbundstapels gemäß Anspruch 1. Die Erfindung betrifft weiterhin ein Computerprogramm zum Durchführen des Verfahrens.

Bei der Fertigung von Elektrodenverbundstapeln, die auch als ESV (Elektroden-Separator-Verbund) bezeichnet werden, werden in abwechselnder Reihenfolge Elektrodenblätter, der Anode und der Kathode aufeinandergestapelt. Zwischen den Elektrodenblättern befindet sich jeweils eine Separatorschicht, welche die Elektroden elektrisch voneinander isoliert.

Die Ablagegenauigkeit der Elektrodenblätter ist ein Gütekriterium für die Prozessfähigkeit des Stapelprozesses und gleichzeitig auch ein sicherheits- und funktionsrelevantes Produktmerkmal des ESV. Ziel ist es, dass alle Elektrodenblätter in einem definierten Abstand sowie einem definierten Toleranzbereich abgelegt sind. Je höher die Elektrodenabdeckung im ESV, desto höher die elektrochemische Performance. In vielen ESV sind die Elektrodenblätter der Anoden umlaufend einen bis wenige Millimeter größer, um eine vollständige Überdeckung der kathodischen Elektrodenblätter zu gewähren. Je geringer, der umlaufende überstehende Rand der Anodenblätter, je präziser muss die Ablage des Stapels erfolgen. Gleichzeitig soll aber auch die Herstellungsgeschwindigkeit erhöht werden, was einer genauen Ablage entgegensteht. Aus diesem Grund muss die die Ablagegenauigkeit der Elektrodenblätter im ESV zuverlässig, schnell und ebenso präzise ermittelt werden.

Im Stand der Technik sind verschiedene Verfahren bekannt, die Ablagegenauigkeit zu ermitteln, wobei typischerweise zur bildgebenden Aufnahme Röntgenstrahlen eingesetzt werden. Jedoch weisen die aus solchen Aufnahmen gewonnenen 3D-Bilddaten oftmals - je nach Aufnahmegeschwindigkeit - ein schlechtes Signal-zu-Rausch Verhältnis auf, so dass die Bilddaten oftmals durch Fachpersonal in bildgebender Software ausgewertet werden, um die entsprechende Parameter, wie beispielsweise die Position der Ecken der Elektrodenblätter zu ermitteln.

Darüber hinaus kann eine Verdrehung der Elektrodenblätter im Stand der Technik ermittelt werden, so dass zwar eine Ablagegenauigkeit bestimmt werden kann, aber nicht zwingend Maßnahmen für eine Korrektur verbesserte Ablage abgeleitet werden können.

Die Aufgabe der Erfindung ist daher, ein Verfahren zur Verfügung zu stellen, dass vollautomatisch, robust und präzise die Positionen der Eckbereiche der Elektrodenblätter in einem ESV bestimmt.

Das erfindungsgemäße Problem wird durch ein Verfahren gemäß Anspruch 1 gelöst. Vorteilhafte Ausgestaltungen der Erfindung sind in den Unteransprüchen angegeben und werden nachfolgend beschrieben.

Danach ist ein Verfahren, insbesondere ein computer-implementiertes Verfahren zum Ermitteln einer Position zumindest eines Eckbereichs von einzelnen vieleckigen, insbesondere rechteckigen, Elektrodenblättern in einem Elektrodenverbundstapel, umfassend die Schritte:
- 3D-bildgebendes Aufnehmen des Eckbereichs von Elektrodenblättern des Elektrodenverbundstapels in einem Aufnahmebereich mittels eines Bildgebungsverfahrens, insbesondere eines computertomographischen Bildgebungsverfahrens, so dass ein Datensatz erzeugt wird, der eine 3D-Lageinformation der Elektrodenblätter in dem Eckbereich des Elektrodenverbundstapels relativ zu einem Träger und/oder einem im Aufnahmebereich des Bildgebungsverfahrens angeordneten Marker umfasst,
- Aus dem Datensatz Ermittlung eines ersten und eines zweiten korrigierten Kantenverlaufs der den Eckbereich einrahmenden Kanten jedes Elektrodenblatts des Elektrodenverbundstapel, wobei anhand des korrigierten Kantenverlaufs eine Position der Ecke des jeweiligen Elektrodenblatts ermittelt, beispielsweise durch Extrapolation der korrigierten Kantenverläufe, wird,
- wobei zunächst der erste und zweiten Kantenverlauf mit zumindest den folgenden Schritten ermittelt wird:
   ∘ Erzeugen einer Vielzahl an xz- und yz-Schnittbildern,
   o Identifizieren der Elektrodenblätter in jedem xz-Schnittbild und in jedem yz-Schnittbild,
   ∘ In jedem xz- und in jedem yz-Schnittbild und für jedes identifizierte Elektrodenblatt darin,
      ▪ Ermitteln eines Elektrodenblattverlauf von einem Referenzlagenbereich im Elektrodenverbundstapel bis hin zu einer Elektrodenkantenlage des Elektrodenblatts durch ein erstes neural network System,
      ▪ Anpassung des Elektrodenblattverlaufs, so dass sich der Elektrodenblattverlauf auf Höhe der Referenzlage vom Referenzbereich bis zu einer korrigierten Elektrodenkantenlage erstreckt, wobei eine Weglänge des Elektrodenblattverlaufs unverändert bleibt,
   o Jeweils Ermitteln einer Geraden, die entlang der korrigierten Elektrodenkantenlagen entlang der ersten bzw. der zweiten Kante für jedes Elektrodenblatt verläuft, wobei die Geraden dem ersten Kantenverlauf und dem zweiten Kantenverlauf entsprechen.

Das erste convolutional neural network System ist insbesondere ein trainiertes convolutional neural network-System, das zum Erkennen der Elektrodenblattverlaufs konfiguriert ist.

Als neural network wird im deutschen Sprachgebrauch ein neuronales Netz bezeichnet. Ein convolutional neural network würde dann in etwa einem konvolutionalen neuronalen Netz entsprechen, was aber im deutschen Sprachgebrauch unüblich ist, Aus diesem Grund wird in der vorliegenden Spezifikation der weltweit verwendete Begriff convolutional neural network verwendet.

Dem Datensatz und insbesondere dem aufgenommenen Bereich kann ein Koordinatensystem, z.B. ein kartesisches Koordinatensystem zugeordnet werden; dabei sind die Achsen vorzugsweise so ausgerichtet, dass eine z-Achse senkrecht zu den Elektrodenblättern steht, und x- und y- Achse parallel jeweils senkrecht auf die z-Achse stehen. Sofern es sich bei den Elektrodenblättern um rechteckige Elektrodenblätter handelt, ist die x- und y- Achse vorzugsweise entlang der gewünschten Kantenausrichtung der Elektrodenblätter ausgerichtet.

Das Koordinatensystem ist vorzugsweise zum Marker und/oder zum Träger assoziiert, wobei die y-Achse beispielsweise entlang einer ersten Erstreckungsrichtung des Trägers verläuft und die x-Achse entlang einer zweiten Erstreckungsrichtung des Trägers verläuft.

In diesem Zusammenhang wird angemerkt, dass die Bezeichnung "xz-Schnittbild" sowie "yz-Schnittbild" nicht zwingend in Bezug auf das Kartesische Koordinatensystem verstanden werden muss, sondern in erster Linie dazu dient, eine begriffliche Unterscheidung zwischen den Schnittbildern zu ermöglichen. Die xz-Schnittbilder und die yz-Schnittbilder verlaufen jedoch nicht parallel zueinander und sind vorzugsweise so ausgerichtet, dass die Schnittebenen entlang derer die Schnittbilder erzeugt werden in etwa oder genau senkrecht zu dem ersten bzw. dem zweiten Kantenverlauf eines ideal-ausgerichteten Elektrodenblattes verlaufen. Insbesondere sofern der Träger die Elektrodenblatt Geometrie entlang einer erste und einer zweiten Kante widerspiegelt, können die Schnittbilder auch senkrecht zu einer ersten und einer zweiten Kante des Trägers verlaufen.

Zum besseren Verständnis sei hier darauf hingewiesen, dass der Begriff "Kantenverlauf" die Gesamtheit einer Kante eines Elektrodenblattes beschreibt, während hingegen der Ausdruck "Elektrodenkantenlage" insbesondere die Position der Elektrodenkante in einem Schnittbild bezeichnet. Aus der Vielzahl der Elektrodenkantenlagen in den Schnittbildern kann für jedes Elektrodenblatt der Kantenverlauf der Elektrodenblätter in 3D ermittelt werden.

Die Elektrodenkantenlage entspricht dabei insbesondere einer Position eines vom Stapel außenliegenden Kantenendabschnitts/ Elektrodenblattrands des Elektrodenblattes.

Gemäß einer Ausführungsform der Erfindung ist vorgesehen, dass die korrigierte Elektrodenkantenlage durch Ermittlung einer Elektrodenblattposition an einer Vielzahl von Stützstellen bestimmt wird, wobei eine erste Stützstelle der Elektrodenkantenlage entspricht, und wobei die Referenzlage des Elektrodenblatts im Elektrodenverbundstapel durch mindestens eine weitere Stützstelle erfasst wird, wobei die Stützstellen durch das erstes convolutional neural network System ermittelt werden, wobei die korrigierte Elektrodenkantenlage durch Verlagerung zumindest der ersten Stützstelle auf Höhe der Referenzlage erreicht wird, wobei eine Weglänge zwischen der ersten und der mindestens einen weiteren Stützstelle konstant bleibt, so dass die Weglänge des Elektrodenblattverlaufs unverändert bleibt.

Aus den Stützstellen in jedem Schnittbild und Elektrodenblatt kann ein Pfad ermittelt werden, der eine zugeordnete Weglänge hat. Die Weglänge kann anhand der Abstände der Stützstellen zueinander ermittelt werden. Alternativ ist es möglich, die Weglänge des Pfades aus einem durch die Stützstellen ermittelten Weg (z.B: spline-Segmente der Stützstellen) zu ermittelten.

Ein wichtiger Aspekt, bei der Ermittlung der korrigierten Elektrodenkantenlage, ist dass die Weglänge des Elektrodenblattverlaufs bzw. Pfades konstant bleibt. Dadurch wird erreicht, dass die korrigierte Elektrodenkantenlage keine Stauchung oder Dehnung des Elektrodenblattes implizieren würde.

Insbesondere werden in jedem Schnittbild und für jedes Elektrodenblatt alle Stützstellen des Elektrodenblattes so verlagert, dass diese einen geraden Pfad im Schnittbild ausbilden, wobei die Stützstellen auf Höhe der Referenzlage verlagert werden. Hierdurch wird ein Kantenverlauf ermittelt, der vollständig in einer Ebene verlaufenden Elektrodenblättern entspräche. Oftmals sind einige der Elektrodenblätter in einem Stapel an den Kanten verbogen oder abgeknickt, was eine Ermittlung der Position des Eckbereichs erschwert. Die Verlagerung der Stützstellen auf Höhe die Referenzlage beseitigt dieses Problem.

Die Ermittlung der Stützstellen dient insbesondere zur Feststellung eines Elektrodenblattverlaufs im Schnittbild, wobei der korrigierte Kantenverlauf durch ein "Geradebiegen" des Elektrodenblattverlaufs im Schnittbild erreicht wird, sofern dies notwendig ist.

Aus den korrigierten Elektrodenkantenlagen kann ein korrigierter Kantenverlauf für jedes Elektrodenblatt ermittelt werden. Aus diesen korrigierten Elektrokantenverläufe können dann durch Extrapolation oder andere geeignete Maßnahmen die Position des Eckbereichs bzw. die Position der Ecke des Elektrodenblattes ermittelt werden, wenn das Elektrodenblatt vollständig planar im Stapel angeordnet wäre. Nur aus dieser Information kann zuverlässig ein oben beschriebenes Qualitäts- und/oder Performance-Kriterium abgeleitet werden.

Der Ausdruck "neural network-System" umfasst insbesondere und vorzugsweise ein convolutional neural network-System und wird aus diesem Grund auch als CNN-System abgekürzt.

Das neural network-System ist im Kontext der vorliegenden Spezifizierung immer ein trainiertes System, das anhand von entsprechend gelabelten Datensätzen auf das Erkennen bzw. Klassifizieren entsprechender Merkmale trainiert wurden.

Dem Fachmann sind entsprechenden Trainingsverfahren bekannt.

Ein CNN-System umfasst insbesondere eine Vielzahl an neural networks, insbesondere eine Vielzahl an convolutional neural networks, wobei jedes für eine bestimmte Aufgabe trainiert und konzipiert ist.

Gemäß einer Ausführungsform der Erfindung ist vorgesehen, dass jedes xz-Schnittbild entlang einer Ebene umfassend eine Stapelrichtung (z) des Elektrodenverbundstapels und einer ersten Schnittrichtung (x), die senkrecht zu einer durch den Träger und/oder den Marker vermittelten ersten Kantenverlaufsrichtung verläuft, parallel versetzt, erzeugt wird, und/oder wobei jedes yz-Schnittbild entlang einer Ebene umfassend die Stapelrichtung (z) des Elektrodenverbundstapels und einer zweiten Schnittrichtung (y), die senkrecht zu einer durch den Träger oder den Marker vermittelten zweiten Kantenverlaufsrichtung verläuft, parallel versetzt, erzeugt wird.

Gemäß einer weiteren Ausführungsform der Erfindung sind die folgenden Schritte vorgesehen:
- Für jedes Elektrodenblatt ermitteln einer ersten Geraden, durch die aus den xz-Schnittbildern ermittelten korrigierten Elektrodenkantenlagen, wobei die erste Gerade dem korrigierten ersten Kantenverlauf entspricht,
- Für jedes Elektrodenblatt ermitteln einer zweiten Geraden, durch die aus den yz-Schnittbildern ermittelten korrigierten Elektrodenkantenlagen, wobei die zweite Gerade dem korrigierten zweiten Kantenverlauf entspricht.

Gemäß einer weiteren Ausführungsform der Erfindung ist vorgesehen, dass ein Schnittpunkt des ersten und zweiten Kantenverlaufs für jedes Elektrodenblatt ermittelt wird, insbesondere wobei die Ermittlung des Schnittpunktes, einen Schnittpunkt bezgl. einer Projektion des Kantenverlaufs entlang der Stapelrichtung, also auf eine Ebene umfasst, wobei dem Schnittpunk die Position der Ecke des jeweiligen Elektrodenblatts zugeordnet wird.

Da bei den Elektrodenblättern die Eckbereiche abgerundet oder abgebrochen sein können, kann diese Ausführungsform dazu dienen, die Position der Ecke des Elektrodenblattes sehr genau zu identifizieren.

Gemäß einer weiteren Ausführungsform der Erfindung ist vorgesehen, dass das Verfahren für zwei oder mehr Eckbereiche der Elektrodenblätter der Elektrodenverbundstapel durchgeführt wird, und so die Position für zwei oder mehr Ecken der Elektrodenblätter bestimmt wird.

Die Eckbereiche können parallel während einer einzigen Aufnahme des Elektrodenverbundstapels erfolgen, oder seriell mit verschiedenen Aufnahmen der jeweiligen Eckbereiche.

Die Aufnahme und Auswertung von mehreren Eckbereichen und damit Eckpositionen ermöglicht eine präzisere Bestimmung der Elektrodenblatt Pose im Elektrodenverbundstapel.

Insbesondere ist vorgesehen, die Positionen der Ecken von zwei diagonal gegenüberliegenden Eckbereichen der Elektrodenblätter zu bestimmen. Dies ist besonders vorteilhaft bei rechteckigen Elektrodenblattgeometrien.

Gemäß einer weiteren Ausführungsform der Erfindung werden die Elektrodenblätter in den xz- und den yz-Schnittbildern durch ein weiteres, z.B. ein zweites trainiertes, insbesondere convolutional neural network-System zum Identifizieren von Elektrodenblättern identifiziert, insbesondere wobei die Elektrodenblätter im Bereich des Elektrodenverbundstapels identifiziert werden, der die Referenzlage umfasst.

Die Referenzlage ist insbesondere in einem Bereich des Stapels verortet, in dem der Stapel von dem Träger eingefasst und verpresst ist, so dass Abstände und eine Ausrichtung der Elektrodenblätter im Wesentlichen identisch sind. Insbesondere die Ausrichtung entlang der Schnittbilder erfolgt dabei parallel zum Träger, wodurch sich die Elektrodenblätter insbesondere parallel zueinander und horizontal entlang x- oder y-Richtung erstrecken.

Dieses zweite CNN-System, erlaubt es die einzelnen Elektrodenblätter in den Schnittbildern zu identifizieren, und auch eine Abfolge z.B. in Form einer Nummerierung der Elektrodenblätter zu bestimmen. Dadurch kann eine relative Lage der Elektrodenblätter im Stapel ermittelt werden. Die Elektrodenblätter können sich bezüglich der Grauwerte in den Schnittbildern unterscheiden, insbesondere variieren die Grauwerte der Elektrodenblätter im Bereich des Elektrodenblattes, je nach Position in dem Elektrodenblatt.

Ein CNN-System gemäß dieser Ausführungsform erlaubt unabhängig davon eine robuste und präzise Identifikation der Elektrodenblätter.

Das zweite CNN-system kann beispielsweise drei convolutional neural networks (CNN) umfassen, wobei ein erstes CNN (CNN3) des zweiten CNN-Systems dazu eingerichtet ist, einen Bereich in den Schnittbildern zu identifizieren, in dem die Elektrodenblätter zwischen einem oberen Teil des Trägers und einem unteren Teil des Trägers zu verlaufen, wobei die Elektrodenblätter zwischen dem oberen und unteren Teil des Trägers verpresst sind.

Dieser Bereich umfasst insbesondere die Referenzlage und er bezeichnet insbesondere den Bereich in dem zwischen den Elektrodenblättern keine Zwischenräume vorhanden sind. Dieser Bereich wird im Kontext der Spezifikation auch als Referenzlagenbereich bezeichnet.

Ein zweites CNN (CNN6) des zweiten CNN-Systems ist beispielsweise dazu eingerichtet, einen ersten Typ von Elektrodenblättern, z.B. die Anoden in dem Referenzlagenbereich zu identifizieren und ein drittes CNN (CNN7) des zweiten CNN-Systems ist beispielsweise dazu eingerichtet, einen zweiten Typ von Elektrodenblättern, z.B. Kathoden in dem Referenzlagenbereich zu identifizieren.

Insbesondere werden den CNNs als Randbedingung (oder im Trainingsdatensatz bereits implizit angelegt) eine Zahl an Elektrodenblättern des ersten und des zweiten Typs vorgegeben, was zu einer erhöhten Robustheit beim Identifizieren der Elektrodenblätter führt.

Auf diese Weise können anhand des zweiten CNN-Systems die Elektrodenblätter insbesondere nach Typ und bzgl. einer Stapelreihenfolge im Referenzlagenbereich identifiziert werden.

Gemäß einer weiteren Ausführungsform der Erfindung, ist vorgesehen, dass anhand des ersten und des zweiten korrigierten Kantenverlaufs und der Position der mindestens einen Ecke des jeweiligen Elektrodenblatts eine Pose des jeweiligen Elektrodenblatts bezüglich des Trägers und/oder des Markers bestimmt wird.

Insbesondere wenn eine Geometrie des Elektrodenblatts bekannt ist, kann die Position sowie die Orientierung des Elektrodenblatts, der Fachperson auch als Pose bekannt, bestimmt werden. Damit können beispielsweise die Lage aller Ecken des Elektrodenblattes ermittelt werden, wobei nur eine einziger Eckbereich aufgenommen und ausgewertet wird.

Gemäß einer weiteren Ausführungsform der Erfindung wird anhand der ermittelten Pose, die im Kontext der Spezifikation auch als Ist-Pose bezeichnet wird, für jedes Elektrodenblatt eine Abweichung von einer vordefinierten Pose, beispielsweise eine Soll-Pose, bezüglich des Trägers und/oder des Markers ermittelt, insbesondere wobei die Abweichung der Pose für jedes Elektrodenblatt mittels einer Angabe über einen Momentanpol erfolgt.

Der Momentanpol erlaubt es die Abweichung der Pose vermittels eines Drehzentrums und eines Drehwinkel des Elektrodenblattes zu beschrieben, insbesondere sofern nicht nur eine geradlinige Translation, sondern auch eine Rotation die Abweichung der Pose des Elektrodenblatts beschreibt. Durch den Momentanpol kann mit nur zwei Werten (Drehzentrum und Drehwinkel) die Abweichung der Pose vollständig beschrieben werden.

Die Bestimmung der Abweichung erlaubt es, den Herstellungsprozess zu optimieren, beispielsweise wenn systematische Abweichungen der Pose ermittelt werden.

Gemäß einer weiteren Ausführungsform der Erfindung wird anhand der ermittelten Abweichung während eines Herstellungsverfahrens für einen weiteren Elektrodenverbundstapel eine Ablagepose der Elektrodenblätter auf den Elektrodenverbundstapel angepasst, so dass bei dem weiteren Elektrodenverbundstapel die Abweichungen geringer ausfallen.

Dadurch kann während des Herstellungsprozesses bereits eine Optimierung der Ablage der Elektrodenblätter erfolgen.

Gemäß einer weiteren Ausführungsform der Erfindung ist vorgesehen, dass für jedes Elektrodenblatt aus der oder den ermittelten Positionen der Ecken, Positionen von verbleibenden Ecken des jeweiligen Elektrodenblatts bestimmt werden, die noch nicht ermittelt wurden, wobei die Bestimmung der verbleibenden Ecken aus in einer Datenbank hinterlegten Abmessungen des Elektrodenblatts erfolgt.

Gemäß dieser Ausführungsform kann eine Gesamtinformation über die Pose und Geometrie sowie die Position aller Ecken des Elektrodenblätter ermittelt werden, was ein erhöhtes Maß an Robustheit und Präzision des Verfahrens ermöglicht.

Gemäß einer weiteren Ausführungsform der Erfindung umfasst die Vielzahl an Elektrodenblättern eine Vielzahl an Elektrodenblättern eines ersten Typs und eine Vielzahl an Elektrodenblättern eines zweiten Typs.

Die Elektrodenblätter des ersten Typs können wie bereits in vorherigen Absätzen ausgeführt beispielsweise Anoden sein und die Elektrodenblätter des zweiten Typs können beispielsweise Kathoden sein.

Gemäß einer weiteren Ausführungsform der Erfindung umfassen die Elektrodenblätter des ersten Typs eine größere Fläche als die Elektrodenblätter des zweiten Typs, wobei die Elektrodenblätter des ersten Typs und des zweiten Typs abwechselnd im Elektrodenverbundstapel aufgestapelt sind, so dass die Elektrodenblätter des ersten Typs im Elektrodenverbundstapel zumindest an einer Seite, insbesondere an allen Seiten über die Elektrodenblätter des zweiten Typs hinausragen, insbesondere wobei die Elektrodenblätter konzentrisch aufgestapelt sind.

Der Begriff "konzentrisch" bezieht sich in diesem Zusammenhang darauf, dass der Schwerpunkt jedes Elektrodenblattes idealer Weise auf der gleichen Achse parallel der Stapelrichtung liegt und dass die Elektrodenblätter die gleiche Orientierung haben.

Zwischen den Elektrodenblättern ist wie bereits in den vorigen Absätzen besprochen eine Separatorschicht angeordnet.

Insbesondere sind die Elektrodenblätter des ersten Typs umlaufend wenige Mikrometer oder Millimeter größer, um eine vollständige Überdeckung der Elektrodenblätter des zweiten Typs zu gewähren. Insbesondere die Elektrodenblätter des ersten Typs können im umlaufenden und überstehenden Bereich von der Referenzlage abweichen, z.B. abgeknickt oder verbogen sein. Der Referenzlagenbereich lässt bei dieser Art der überstehenden Elektrodenblätter als Bereich definieren, in dem die Elektrodenblätter nicht überstehen, sondern noch auf den Elektrodenblättern des zweiten Typs aufliegen. In diesem Bereich herrscht typischer Weise ein hohes Maß an Parallelität der Elektrodenblätter, so dass sich dieser Bereich als Referenzlage, insbesondere Referenzhöhe, anbietet, entlang derer der korrigierte Elektrodenblattverlauf sich erstreckt.

Gemäß einer weiteren Ausführungsform der Erfindung weisen die Elektrodenblätter des ersten Typs in den Schnittbildern einen von den Elektrodenblättern des zweiten Typs verschiedenen Grauwertbereich auf, so dass die Elektrodenblätter im Datensatz anhand des verschiedenen Grauwertbereichs unterscheidbar sind.

Der Grauwert in den Schnittbildern bestimmt sich beispielsweise aus einem Absorptionskoeffizient der Elektrodenblätter, insbesondere eines Absorptionskoeffizienten im Röntgenbereich eines computertomographischen Bildgebungsverfahrens.

Der Begriff Grauwert umfasst dabei auch eine Farbe, insbesondere eine Falschfarbe, im Schnittbild. Die Elektrodenblätter des ersten und zweiten Elektrodentyps können sich demnach auch in ihrer Farbe im Schnittbild unterscheiden.

Gemäß einer weiteren Ausführungsform der Erfindung ist vorgesehen, dass in einem ersten Bildaufbereitungsschritt ein drittes trainiertes neural network-System zum Erkennen einer vorläufigen Elektrodenkantenlage der Elektrodenblätter in jedem xz- und jedem yz-Schnittbild und für jedes Elektrodenblatt die Elektrodenkantenlage der Elektrodenblätter vorläufig ermittelt, und wobei weiterhin in jedem xz- und jedem yz-Schnittbild und für jedes Elektrodenblatt die Referenzlage ermittelt wird, wobei die Referenzlage aus einem Bereich des Elektrodenverbundstapel ermittelt wird, in dem die Elektrodenblätter in regelmäßigem Abstand und insbesondere lückenlos entlang der Stapelrichtung aufgestapelt sind.

Im Falle, dass der Elektrodenverbundstapel Elektrodenblätter des ersten und des zweiten Typs aufweist, wobei die Elektrodenblätter des ersten Typs umlaufend über die Elektrodenblätter des zweiten Typs hervorstehen, kann folgende CNN-System Architektur vorteilhaft sein:
Das dritte CNN-System umfasst in diesem Fall beispielsweise ein erstes CNN (CNN2), das darauf trainiert ist, einen Bereich des Elektrodenverbundstapel in jedem Schnittbild zu identifizieren, der die Elektrodenkantenlagen der Elektrodenblätter des zweiten Typs umfasst, also beispielsweise der (kleineren) Kathoden.

Weiterhin umfasst das dritte CNN-System ein zweites CNN (CNN5) auf, das darauf trainiert ist, die Elektrodenkantenlage der Elektrodenblätter des zweiten Typs zu detektieren, wobei die Elektrodenkantenlage dabei nur als vorläufiges Ergebnis behandelt wird, was mit dem Begriff "vorläufig ermittelt" zum Ausdruck gebracht wird. Um eine zuverlässige vorläufige Ermittlung zu gewähren, kann die Zahl der zu identifizierenden Elektrodenkantenlagen vorgegeben werden (z.B. implizit durch das Trainingsset oder durch eine zusätzliche Randbedingung). Durch die Einschränkung des Bereichs für die Erkennung der Elektrodenkantenlagen, wird eine erhöhte Robustheit und Zuverlässigkeit erreicht.

In gleicher Art und Weise werden die Elektrodenkantenlagen des ersten Typs vorläufig ermittelt. D.h. das dritte CNN-System umfasst weiterhin ein drittes CNN (CNN1), das in jedem Schnittbild einen Bereich, der Elektrodenkantenlage des ersten Typs einschließt, ermittelt. Wobei sodann in diesem Bereich ein viertes CNN (CNN4) die Elektrodenkantelagen der Elektrodenblätter des ersten Typs vorläufig ermittelt.

Um eine zuverlässige Ermittlung zu gewähren, kann die Zahl der zu identifizierenden Elektrodenkantenlagen vorgegeben werden (z.B. implizit durch das Trainingsset oder durch eine zusätzliche Randbedingung). Durch die Einschränkung des Bereichs für die Erkennung der Elektrodenkantenlagen, wird eine erhöhte Robustheit und Zuverlässigkeit erreicht.

In diesen vom dritten und ggf. zweiten CNN-System erkannten Merkmalen (Typ des Elektrodenblatts, Position des Elektrodenblatts im Elektrodenverbundstapel, Referenzlagenbereich, vorläufige Elektrodenkantenlagen) kann das erste CNN-System beispielsweise die erste und ggf. weitere Stützstellen ermitteln, so dass ein Pfad, der die Stützstellen umfasst und verbindet und den Verlauf des Elektrodenblatts in dem Schnittbild wiedergibt, ermitteln. Insbesondere entspricht die erste Stützstelle dabei der (endgültigen) Elektrodenkantelage, also nicht mehr der vorläufig ermittelten Kantenlage.

Die Erstellung des Pfades durch die Stützstellen kann ebenso mittels eines CNN erfolgen.

Gemäß einer weiteren Ausführungsform der Erfindung ermittelt in einem zweiten Bildaufbereitungsschritt das erste trainierte CNN-System in jedem xz- und jedem yz-Schnittbild und für jedes Elektrodenblatt die Vielzahl der Stützstellen, wobei die Ermittlung für sowohl die Elektrodenblätter des ersten Typs als auch für Elektrodenblätter des zweiten Typs jeweils auf einen Bereich eingeschränkt ist, der durch eine am weitesten innen, also am weitesten von den Elektrodenkantenlagen in Richtung eines Zentrums des Elektrodenverbundstapels gelegene vorläufig ermittelte Elektrodenkantenlage der Elektrodenblätter des ersten Typs bzw. des zweiten Typs und einer am weitesten außen, also am weitesten von dem Zentrum des Elektrodenverbundstapels entfernt gelegene vorläufig ermittelten Elektrodenkantenlage der Elektrodenblätter des ersten Typs bzw. des zweiten Typs vorgegeben ist.

Diese Einschränkung ermöglicht eine zuverlässige Ermittlung der Stützstellen durch das erste CNN-System.

Gemäß einer weiteren Ausführungsform der Erfindung wird für jedes xz- und jedes yz-Schnittbild und für jedes Elektrodenblatt ein Pfad und eine dem Pfad zugeordnete Pfadlänge, die der Weglänge der Vielzahl der Stützstellen entspricht, ermittelt, wobei für jedes xz- und jedes yz-Schnittbild und für jedes Elektrodenblatt die ermittelten Stützstellen mittels einer Transformation auf einen geraden Pfad senkrecht zur Höhe des Elektrodenverbundstapels verlagert werden und zwar so, dass die Weglänge konstant bleibt, wodurch die Höhe der ersten Stützstelle, insbesondere die Höhe aller Stützstellen des jeweiligen Elektrodenblatts in dem jeweiligen Schnittbild auf die Referenzlage eingestellt wird.

Gemäß einer weiteren Ausführungsform der Erfindung weist der Träger an seinen Ecken Eckbereiche auf, wobei zumindest die Eckbereiche des Trägers einen im Vergleich zu einem zentralen Bereich des Trägers niedrigeren Absorptionskoeffizienten aufweisen, so dass Röntgenstrahlung eines bildgebenden Verfahrens zum Aufnehmen des Elektrodenverbundstapels durch die Eckbereiche des Trägers weniger absorbiert werden als im zentralen Bereich des Trägers.

Die Eckbereiche des Trägers korrespondieren insbesondere mit den Eckbereichen des Elektrodenverbundstapels.

Gemäß einem weiteren Aspekt der Erfindung ist ein Computerprogramm vorgesehen, das computer-lesbaren Computercode umfasst, der, wenn er auf einem Computer ausgeführt wird, das Verfahren nach einem der vorhergehenden Ausführungsformen ausführt.

Das Computerprogramm kann als Computerprogramm Produkt auf einem computer-lesbaren, nicht-transitorischen Speichermedium gespeichert sein.

Gemäß eines weiteren Aspekts der Erfindung ist ein Träger für einen Elektrodenverbundstapel vorgesehen, der einen von Kanten des Träger eingefassten zentralen Bereich aufweist, wobei der Träger weiterhin eine Vielzahl an Eckbereichen aufweist, die an den Enden seiner Kanten lokalisiert sind, wobei der Träger in den Eckbereichen eine im Vergleich zum zentralen Bereich niedrigere Absorption aufweist, so dass die Eckbereiche für Röntgenstrahlung transparent sind, insbesondere also weniger als 20% der Strahlung absorbieren, wobei der zentrale Bereich für diese Strahlung nicht transparent ist, insbesondere wobei der zentrale Bereich mehr als 80% der Strahlung absorbiert.

Insbesondere weist der zentrale Bereich des Trägers einen Edelstahl auf.

Der Träger kann als Träger in dem erfindungsgemäßen Verfahren verwendet werden.

Insbesondere bestehen die Eckbereich aus einem Material, das einen geringen Absorptionskoeffizienten hat. Alternativ können die Eckbereiche eine geringere Dicke als der zentrale Bereich aufweisen, so dass die Absorption geringer ausfällt.

Gemäß einer weiteren Ausführungsform des Trägers, bestehen die Eckbereiche aus Aluminium, Carbon, oder einem Kunststoff, insbesondere wobei der Kunststoff ABS, POM enthält.

Insbesondere liegt der Massenschwächungskoeffizient in den Eckbereichen bei einer Photonenenergie von 10 keV und 300 keV im Bereich 2,62 und 0,011 in m²/kg.

Gemäß einer weiteren Ausführungsform der Erfindung liegt der Massenschwächungskoeffizient in den Eckbereichen bei einer Photonenenergie von 10 keV und 300 keV im Bereich 23,7 und 0,011 in m²/kg.

Insbesondere umfasst der Aufnahmebereich einen Teil des Trägers, so dass der Träger als Bezugssystem verwendet werden kann, um die Position der Ecke bzw. die Pose der Elektrodenblätter zu bestimmen.

Gemäß einer weiteren Ausführungsform der Erfindung ist vorgesehen, dass die Marker Kugeln in einer zuvor ermittelten drei-dimensionalen Anordnung im Aufnahmebereich angeordnet sind, so dass ein eindeutig festgelegtes Koordinaten-System in jeder Aufnahme ermittelt werden kann, so dass die Position der Ecke bzw. die Pose der Elektrodenblätter bezüglich dieses Koordinatensystems ermittelt und angegeben werden kann.

Weitere Merkmale und Vorteile der Erfindung werden nachfolgend anhand der Figurenbeschreibung von Ausführungsbeispielen erläutert. Es zeigen:
Fig. 1 ein Aufnahme System zur Durchführung des erfindungsgemäßen Verfahrens;
Fig. 2 einen Träger gemäß der Erfindung;
Fig. 3 einen Schnitt entlang der x-z Ebene durch einen ESV
Fig. 4 eine vergrößerte Ansicht des Schnittbildes in Fig. 3
Fig. 5 eine Ansicht des ESV im Träger;
Fig. 6 eine schematische Darstellung der Ablagezonen für die Elektrodenblätter des ESV;
Fig. 7 ein Flussdiagram zur Darstellung des erfindungsgemäßen Verfahrens;
Fig. 8 eine schematische Darstellung des Ergebnisextraktionsschrittes für eine Ecke;
Fig. 9 eine schematische Darstellung des Ergebnisextraktionsschrittes für weitere Ecke;
Fig. 10 eine schematische Darstellung der Ergebniszusammenführung zur Ermittlung einer Pose des Elektrodenblatts;
Fig. 11 eine Schnittansicht einer CT-Aufnahme eines ESV
Fig. 12 eine vergrößerte Ansicht des Schnittbildes; und
Fig. 13 eine Schnittansicht der CT-Aufnahme entlang der x-y-Ebene;
Fig. 14 eine schematische Darstellung der vorläufigen Elektrodenkantelagen Ermittlung der Kathoden im Schnittbild mittels eines CNNs;
Fig. 15 eine schematische Darstellung der vorläufigen Elektrodenkantelagen Ermittlung der Anoden im Schnittbild mittels eines CNNs;
Fig. 16 eine schematische Darstellung der Ermittlung des Typs der Elektrodenblätter, der Reihenfolge der Elektrodenblätter im Referenzebereiche des ESV im Schnittbild mittels eines CNNs;
Fig. 17eine schematische Darstellung der segmentweisen Identifizierung der Stützstellen mittels eines CNNs.

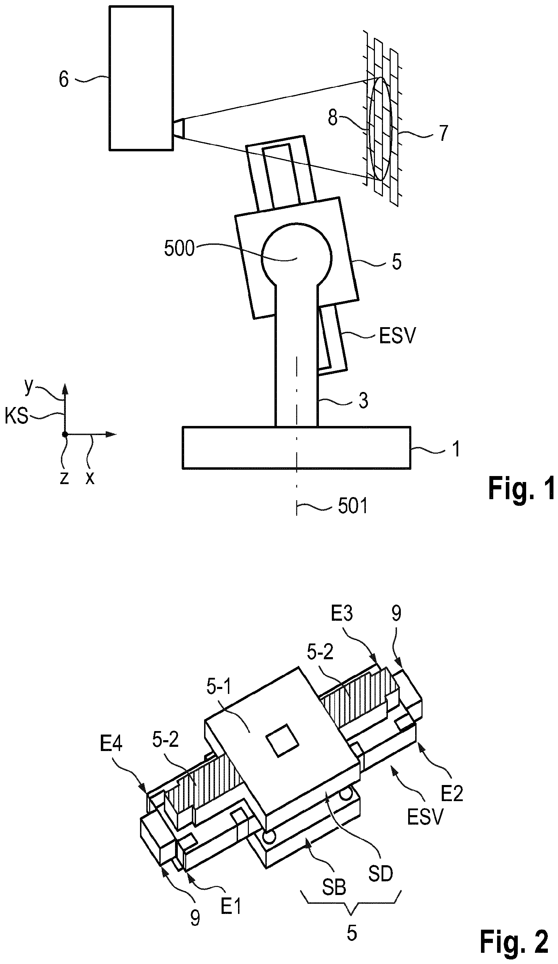

In Fig. 1 ist eine schematische Darstellung eines computertomographischen Bildgebungssystems zum Aufnehmen eines Datensatzes der eine 3D-Lageinformation von Elektrodenblättern in einem Elektrodenverbundstapels (ESV) bezüglich eines Trägers wiedergegeben. Das Bildgebende System umfasst einen Röntgenlichtquelle 6 und ein Röntgenlichtaufnahmegerät 7 (Detektor), die dazu eingerichtet sind computertomographische Aufnahme 8 zumindest eines Eckbereichs des ESV zu erstellen. Der ESV ist dazu in einem Träger 5 gehalten und wird durch diesen entlang seiner Stapelrichtung des ESV (hier ohne Einschränkung der Allgemeingültigkeit entlang der z-Achse eines Kartesischen Koordinatensystems KS) verpresst. Der Träger 5 weist eine Aufnahmeeinrichtung auf, die eine reproduzierbare Aufnahme des Trägers 5 über Zentrierbuchsen gewährleistet. Der Träger 5 ist um eine erste Rotationsachse 500 rotierbar in einer Haltevorrichtung 3 eingespannt, so dass die Elektrodenblätter im ESV zumindest aus einem Eckbereich des ESV vollständig dreidimensional erfasst werden können. Die Haltevorrichtung 5 selbst kann auf einem Drehteller 1 befestigt sein, und so gelagert sein, dass sie sich relativ zum Drehteller 1 um eine weitere Rotationsachse 501 drehen kann.

Aufgrund der reproduzierbaren Position des Koordinatensystems, des ESV, der Röntgenlichtquelle (bzw. der Röntgenstrahlrichtung) und des Detektors ist der Untersuchungsraum, also das Volumen, aus dem die Aufnahme erfasst wird, immer an der gleichen Position und hat die gleiche Orientierung. Auf diese Weise kann später eine Pose der Elektrodenblätter beispielsweise relativ zum Träger oder einem im Untersuchungsraum befindlichen Marker eindeutig beschrieben werden.

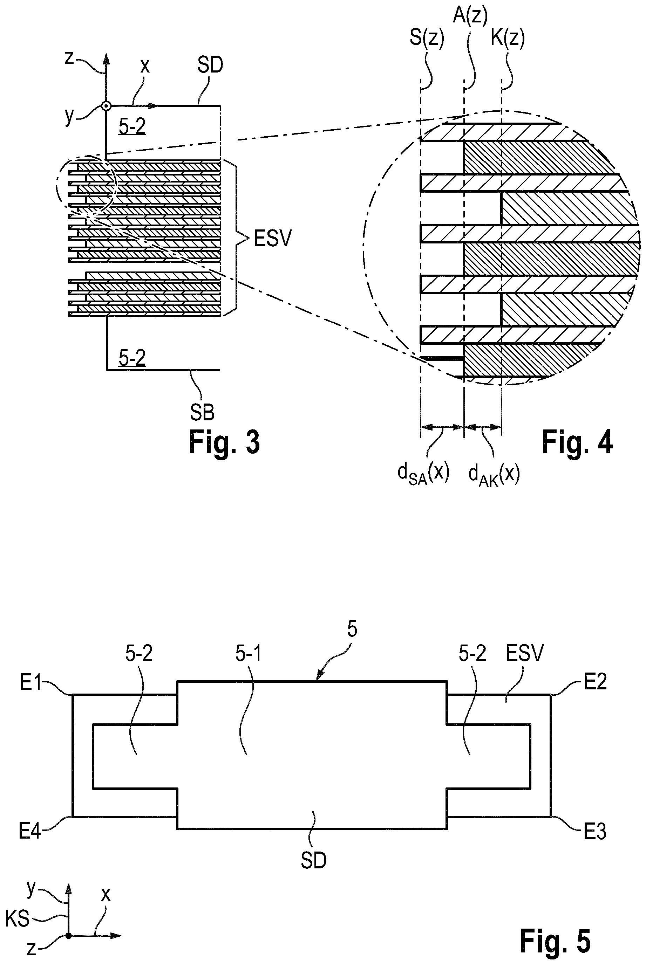

In Fig. 2 (wie auch in Fig. 5) ist einen Ausführungsform des Trägers 5 dargestellt. Der Träger 5 umfasst zwei Trägerplatten SD und SB, zwischen denen der ESV entlang der Stapelrichtung (z-Achse) eingespannt ist. Die Trägerplatten weisen einen zentralen Bereich, der den ESV umlaufend abdeckt und an dessen Rändern Raum und Öffnungen für Verbindungselemente (z.B. Schrauben oder Bolzen) für die beiden Trägerplatten ist. Der Träger 5 weist weiterhin Bereiche 5-2 auf, die aus einem Material gefertigt sind, das entweder im Bereich der CT-Strahlung schwach absorbiert oder dünner als ein zentraler Bereich 5-1 des Trägers 5 gefertigt sind. Die schwach absorbierenden Bereiche 5-2 liegen an den Ecken der Elektrodenblätter und gewährleisten so eine verbesserte Aufnahmequalität der Elektrodenblätter im Bereich der Ecken E1, E2, E3, E4.

Der Elektrodenblätter des ESV in dem vorliegenden Beispiel sind rechteckig, wobei die langen Kanten der Elektrodenblätter parallel zu den Kanten des Trägers verlaufen, so dass über den Träger eine Kantenrichtung der Elektrodenblätter vermittelt wird. Der ESV weist vier Eckbereiche E1, E2, E3 und E4 auf, in denen die Eckbereiche und Ecken der Elektrodenblätter angeordnet sind. An den Stirnseiten des ESV sind jeweils Ableiterfahnen 9 für die Kathoden und die Anoden vorgesehen.

In dem vorliegenden Beispiel überlappt der Träger 5, 5-2 lateral nur im zentralen Bereich 5-1 mit den Elektrodenblättern des ESV, wobei die Eckbereiche der Elektrodenblätter freiliegen. Alternativ kann der Träger 5 in diesen Bereichen 5-2 aus einem (Röntgenstrahlungs-) transparenten Material gefertigt sein, was dem Verbund eine erhöhte Stabilität und Robustheit gegen Stöße verlieht.

In Fig. 3 und 4 sind Schnittansichten eines idealisierten ESV dargestellt. Der ESV besteht aus einer Vielzahl an Elektrodenblättern eines ersten und eines zweiten Typs, die abwechselnd beabstandet und voneinander isoliert durch Separatorschichten S entlang einer Stapelrichtung (z-Achse) des ESV zu dem ESV zusammengefasst sind und durch den Träger 5 umfassend die Trägerteile SD und SB zumindest im zentralen Bereich des Trägers 5 durch den Träger 5 verpresst sind. Der aufzunehmende Bereich ist vorteilhafter Weise nur von den Bereichen 5-2 des Trägers abgedeckt, so dass eine Durchstrahlung effizient erfolgen kann. In diesen Bereichen 5-2 und auch 5-1, verlaufen die Elektrodenblätter parallel zu den Trägerplatten der Trägerteile, wobei diese Richtung/Ebene der x-y-Richtung/Ebene entspricht, die beispielsweise durch den Träger 5 vermittelt wird.

Die Elektrodenblätter des ersten Typs entsprechen den Anoden A und die Elektrodenblätter des zweiten Typs entsprechen den Kathoden K. Wie insbesondere in Fig. 4 ersichtlich, ragen die Anoden entlang dem dargestellten Schnitt in Richtung der x-Achse über die Kathoden hinaus (Abstand d_{AK}(x)), da die Anoden umlaufend größer sind als die Kathoden. D.h. die Anoden ragen auch entlang der y-Achse über die Kathoden hinaus (nicht dargestellt). Die Separatorenschichten ragen ihrerseits umlaufend über die Anoden hinaus (Abstand d_{SA}(x)) Letzteres dient zu Prozesssicherheit des ESV, während die Anoden über die Kathoden hinausragen, um eine vollständige Abdeckung der Kathoden zu gewährleisten, was die Performance des ESV sicherstellt.

Die Elektroden als auch die Separatorenschichten können als Funktion ihrer Position (A(z), K(z), S(z)) im ESV identifiziert werden.

Zumeist sind die Separatorenschichten nicht in den computertomographischen Aufnahmen zu erkennen.

Die in diesem Beispiel rechteckigen Elektrodenblätter weisen demnach 4 Eckbereiche E1 bis E4 auf, an denen sich die Kanten der Elektrodenblätter treffen (Fig. 5).

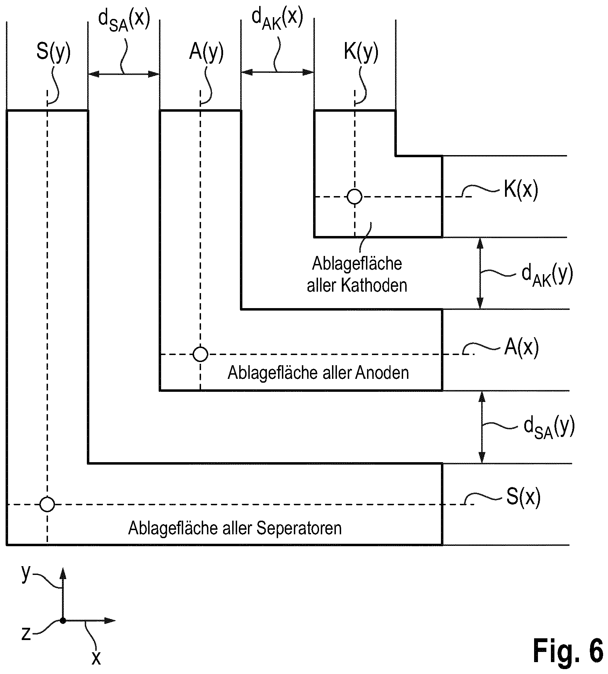

Bei dem Herstellungsprozess des ESV werden die Elektrodenblätter seriell aufeinandergestapelt, wobei die Elektrodenblätter bzw. deren Ecken sich in vordefinierten Toleranzbereichen entlang der x- und y-Richtung befinden müssen. Dies ist schematisch in Fig. 6 dargestellt. Durch die bekannte Geometrie der Elektrodenblätter kann damit auf die Pose der Elektrodenblätter geschlossen werden, wenn entweder die Positionen mehrere Ecken bestimmt werden oder wenn die die Ecke einschließenden Kanten und deren Verlaufsrichtung bestimmt sind.

Die Geometrie jedes Elektrodenblatts kann beispielsweise vor Stapelung im ESV durch ein optisches Verfahren bestimmt werden, so dass für jedes Elektrodenblatt die Geometrie, insbesondere die Abmessungen bekannt ist/sind. Die optische Erfassung kann beispielsweise durch ein Kamerasystem erfolgen, das an eine Auswerteeinheit angeschlossen ist, so dass die Geometrie ermittelt und auch dem jeweiligen Elektrodenblatt zugeordnet werden kann.

Die Ecken der Elektrodenblätter sind insbesondere definiert durch die Verlängerung der Kanten, die diese Ecken einschließen, da die Elektrodenblätter an den Ecken teilweise abgerundet oder abgebrochen sein können.

In Fig. 6 ist für einen Eckbereich dargestellt, in welchen Toleranzbereichen sich die Ecken aller Elektrodenblätter in einem Stapel befinden sollen, wobei zwischen den Anoden und den Kathoden (und auch den Separatorschichten) unterschieden wird. Die Positionen der Ecken der Anoden in der x-y Ebene wird dabei beispielsweise in Form von A(x) (x-Koordinate) und A(y) (y-Koordinate) angegeben, während die Positionen der Ecken der Kathoden in der x-y Ebene in Form von K(x) (x-Koordinate) und K(y) (y-Koordinate) angegeben wird. Die Toleranzbereiche sind in Fig. 6 als Korridore entlang der jeweiligen Achsen dargestellt. Damit die Elektrodenkanten innerhalb dieser Korridore liegen, dürfen die Elektrodenblätter nur eine geringe Verdrehung und Translation bzgl. einer idealen Schwerpunktsposition des Elektrodenblatts aufweisen.

Durch die Ermittlung der Lage einer Ecke sowie deren Kanten, kann festgestellt werden, ob das jeweilige Elektrodenblatt in den vorgegebene Toleranzkorridoren liegt. Dies soll erfindungsgemäß für jedes Elektrodenblatt in dem ESV ermittelt werden.

Die Toleranzbereiche liegen typischer Weise im Submillimeter Bereich. Während die Abstände d_{AK}(x) und d_{AK}(y) in x-Richtung und y-Richtung ebenso im Submillimeterbereich liegen. D.h. die Anoden stehen nur geringfügig über, was eine hohe Präzision bei der Stapel-Herstellung erfordert.

Generell lässt sich sagen, bei einem ESV Stapel, der eine Zahl von N - beispielsweise 20, Kathodenblätter umfasst, dass eine Vielzahl an Prüfmerkmalen ermittelt werden kann. Prüfmerkmale umfassen dabei beispielsweise die folgenden Prüfkriterien:
- Alle vier Ecken der 2N+1 Separatorenschichten müssen in x- und y-Richtung in der definierten Ablagefläche für die Separatoren liegen.
- Alle vier Ecken der N+1 Anoden müssen in x- und y-Richtung in der definierten Ablagefläche für die Anoden liegen.
- Alle vier Ecken der N Kathoden müssen in x- und y-Richtung in der definierten Ablagefläche für die Kathoden liegen.
- Die Ablage der verschiedenen Elektrodenblätter und Separatorenschichten muss in der korrekten Reihenfolge (abwechselnd) vorliegen: S₁-A₁-S₂-K₁-S₃-A₂-S₄-K₂-S₅.....A_{N+1} -S_{2N+1}.
- Der Abstand aller Separatoren zu allen Anoden in x- und y- Richtung muss größer als der Mindestabstand d_{SA}(x) bzw. d_{SA}(y) sein.
- Der Abstand aller Anoden zu allen Kathoden in x- und y- Richtung muss größer als der Mindestabstand d_{AK}(x) bzw. d_{AK}(y) sein.
- Die relative Position des ESV zum Träger kann zentriert sein, sodass für die Separatoren, die Anoden und die Kathoden eine optimale Gerade in x- und y-Richtung an allen Ecken definiert werden kann.

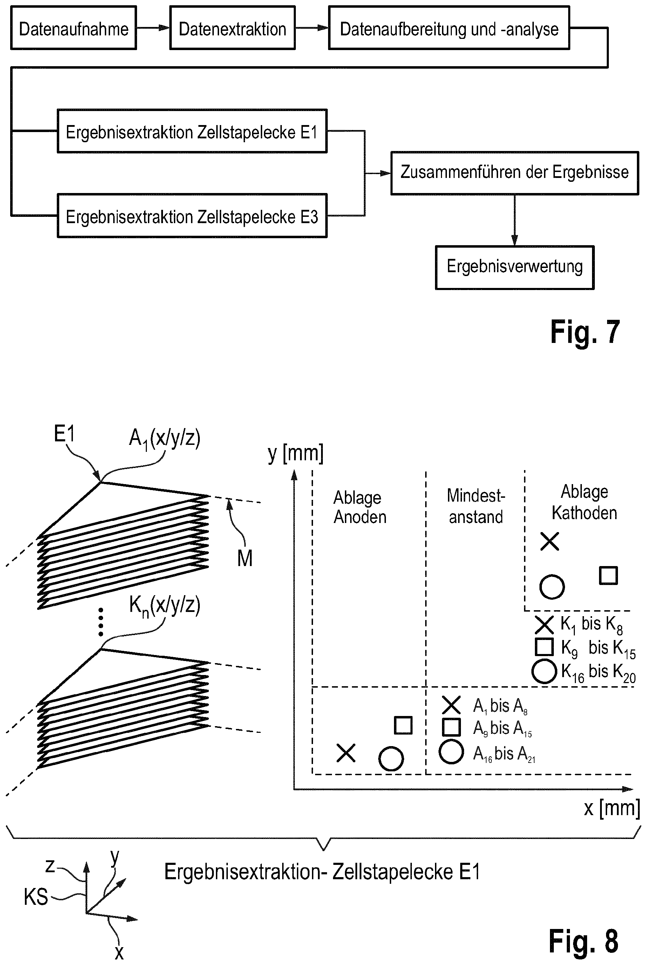

In Fig. 7 ist ein Flussdiagramm abgebildet, in dem ein genereller Ablauf des Verfahrens gemäß der Erfindung dargestellt ist. Nach der Datenaufnahme, die in diesem Beispiel einen Datensatz von zwei diagonal gegenüberliegenden Eckbereichen des ESV erzeugt, der eine 3D-Lageinformation der rechteckigen Elektrodenblätter umfasst, werden die Daten dahingehend aufbereitet und analysiert, dass für jeden der Eckbereich und für jedes Elektrodenblatt aufgelöst nach Typ und Position im Stapel des Elektrodenblatts die Position der Ecke bestimmt wird.

Aus den Positionen kann ermittelt werden, mit welcher Präzision / Toleranz die Elektroden im ESV angeordnet sind. Dazu kann für jedes Elektrodenblatt eine Pose im Stapel ermittelt werden. Im Rahmen der Ergebniszusammenführung, wird die Pose, also die Ist-Pose (Orientierung und Position) jedes Elektrodenblattes beispielsweise dadurch ermittelt, dass über die bekannte Geometrie (Rechteck) des Elektrodenblatts und den ermittelten diagonal gegenüberliegenden Eckpositionen des Elektrodenblatts eine relative Rotation und Translation bezüglich einer Soll-Pose ermittelt wird. Dies kann vorteilhaft durch die Bestimmung eines Momentanpols passieren, der die Abweichung der Ist-Pose zur Soll-Pose mittels eines Drehwinkels und eines Drehzentrums angibt und quantifiziert. Anhand dieser Abweichung kann beispielsweise im Rahmen der Ergebnisverwertung die Ablage weiterer Elektrodenblätter korrigiert werden, so dass die Abweichung minimiert wird. Ebenso kann die Abweichung zur Quantifizierung einer Performance bzw. einer Fertigungstoleranz herangezogen werden.

Es wird in diesem Zusammenhang angemerkt, dass die Position und Orientierung anhand eines Koordinatensystems ermittelt wird, das wie zuvor beschrieben beispielsweise durch den Träger oder einen im Untersuchungsraum angeordneten Marker vermittelt wird. Damit kann die Ist-Pose der Elektrodenblätter präzise und wiederholbar aus den Daten ermittelt werden.

In Fig. 8 ist schematisch für einen Eckbereich E1 des ESV das Auswertungsprinzip der Ergebnisextraktion dargestellt. Dabei wird aus den aufgenommenen Daten für jedes Elektrodenblatt, aufgelöst nach Typ, eine 3D-Postion der Ecke des Elektrodenblatts ermittelt. Was die Position entlang der z-Achse angeht, kann diese auch durch einen Index angegeben werden, der eine Position im Stapel repräsentiert. Die x- und y-Koordinaten der Ecken, also die Eckpositionen, werden sehr genau durch später beschriebene Verfahren bestimmt. Die so ermittelten Eckpositionen können graphisch in einem Koordinatensystem dargestellt werden (rechtes Panel Fig. 8). In diesem Beispiel ist zu sehen, dass die Ecken der Elektrodenblätter je nach Position im Stapel in bestimmten Regionen des Toleranzbereichs der Ablagepositionen liegen.

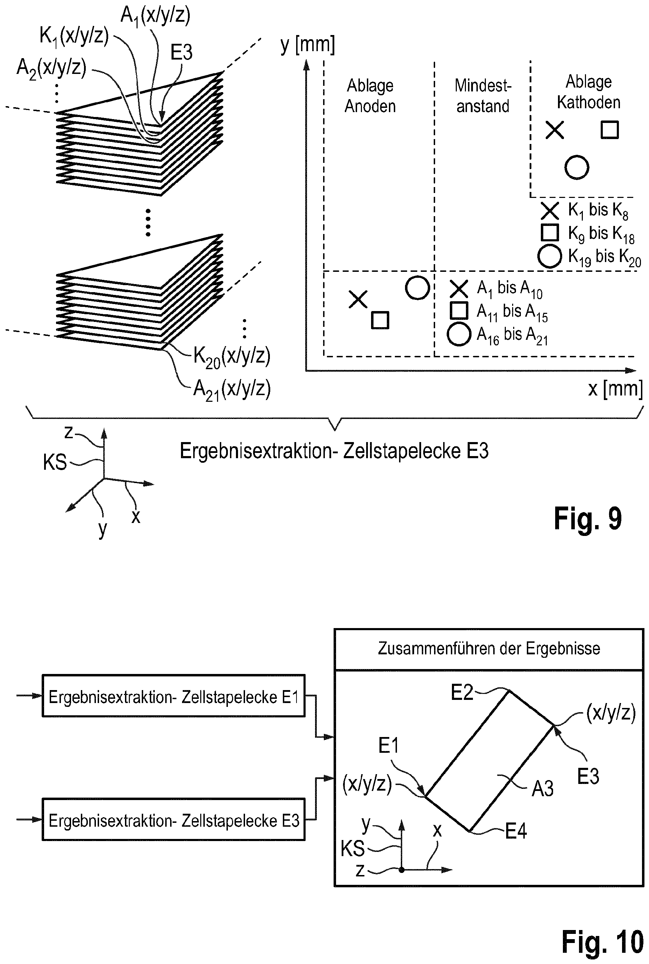

So sind Eckpositionen die ersten 8 Anoden- und Kathodenblätter in einem Bereich, der durch ein "X" dargestellt wird, geclustert, während die darauffolgenden sechs Anoden- und Kathodenblätter in einem Bereich, der mit einem Quadrat gekennzeichnet ist, geclustert sind. Die übrigen Anoden und Kathodenblätter, sind in einem Bereich, der mit einem Kreis gekennzeichnet ist, geclustert. Alle Ecken liegen in dem vorgegebenen Toleranzbereich. Diese Analyse kann für mindestens einen weiteren Eckbereich durchgeführt werden und so eine Ist-Pose der Elektrodenblätter ermittelt werden. Dies ist analog in Fig. 9 dargestellt. Hier sind die Cluster leicht anders verteilt (vgl. Indizes K₁ bis K₈ bzw. A₁ bis A₁₀ etc.). Dennoch liegen alle Ecken in dem Toleranzbereich.

Umgekehrt kann, wenn die Positionen aller Ecken bestimmt werden, die Geometrie des Elektrodenblatts ermittelt werden.

In Fig. 10 ist dargestellt, wie aus den in Fig. 8 und 9 ermittelten Eckpositionen der Elektrodenblätter und der bekannten Rechteck-Geometrie, die Ergebnisse zusammengeführt werden, um für jedes Elektrodenblatt eine Ist-Pose zu ermitteln. In

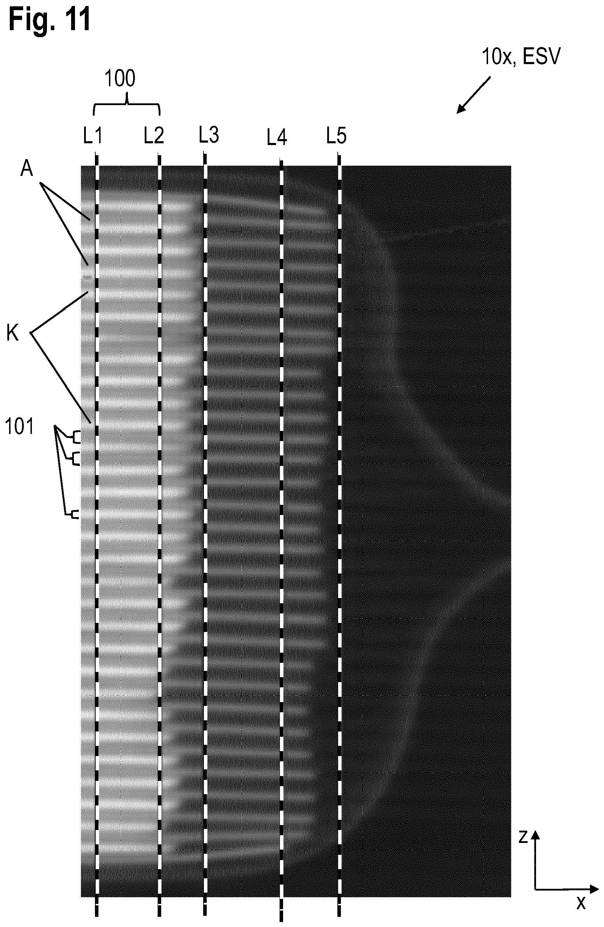

Fig. 11 ist eine xz-Schnittansicht einer computertomographischen Aufnahme eines Eckbereichs eines ESV dargestellt. Darin sind die Elektrodenblätter unterscheidbar in Anoden (dunkelgrau und überstehend) und Kathoden (hellgrau und kürzer) zu erkennen. Die Elektrodenblätter sind entlang einer Stapelhöhe in z-Richtung abwechselnd aufeinandergestapelt. Nicht zu sehen, sind die Separatorenschichten, die jeweils zwischen den Elektrodenblätter angeordnet sind.

In einem Referenzlagenbereich zwischen den Linien L1 und L2, sind die Elektrodenblätter im Wesentlichen parallel und lückenlos im ESV angeordnet. Dies wird durch den Träger (der in der Aufnahme nicht zu sehen ist), der entlang der z-Richtung die Elektrodenblätter aufeinanderpresst, gewährleistet.

Der Referenzlagenbereich ist damit geeignet einen idealen "horizontalen", d.h. entlang der x-y Ebene, Elektrodenblattverlauf zu ermitteln.

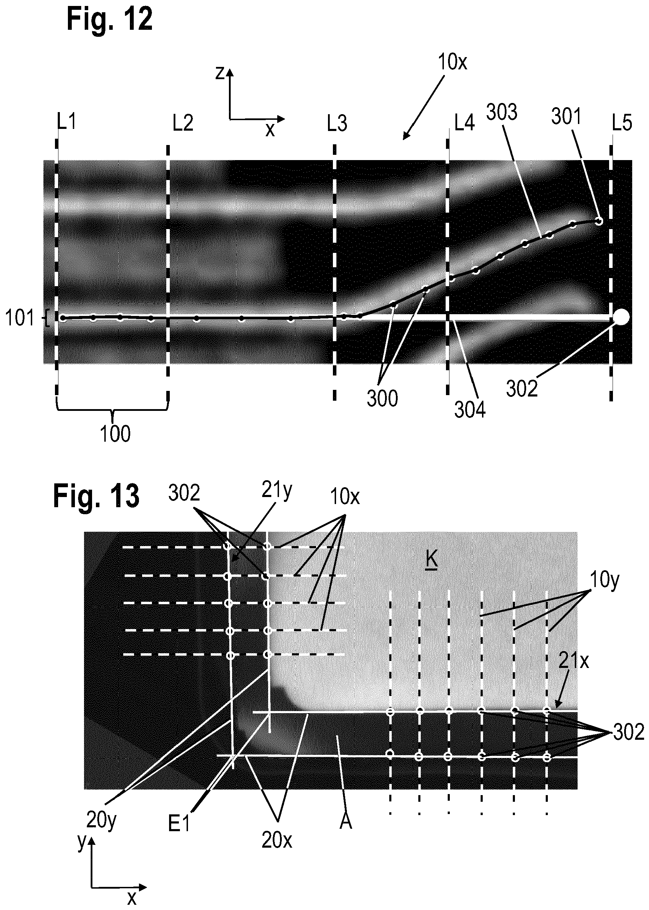

Wie nämlich ebenfalls aus Fig. 11 ersichtlich ist, sind die Elektrodenblätter der Anoden A an ihren Elektrodenkanten, die auch als Elektrodenkantenlage im Kontext der Spezifikation bezeichnet wird, in einigen Bereichen verbogen und ragen daher aus der durch die Referenzlage definierte x-y Ebene des jeweiligen Elektrodenblatts entlang der z-Richtung hinaus. Dies ist für einen Ausschnitt auch in Fig. 12 dargestellt.

Um eine aussagekräftige Eckposition der Anode zu ermitteln, muss für diese Art der Abweichung korrigiert werden.

In Fig. 11 ist weiterhin ein Bereich zwischen den Linien L2 und L3 abgegrenzt, in dem alle Elektrodenkantenlagen (also die Elektrodenblattkanten) des Schnittbilds liegen, die den Kathoden zugordnet werden. Weiterhin ist in Fig. 11 ein Bereich zwischen den Linien L3 und L4 eingegrenzt, in dem alle Elektrodenkantenlagen der Anoden liegen.

Die Identifikation des Referenzlagenbereichs 100, sowie der Bereiche der Elektrodenkantenlagen kann mittles speziell darauf trainierter convolutional neural networks erfolgen. Dazu kann ein zweites CNN-System vorgesehen sein. Anschließend kann in diesen Bereichen die Elektrodenkantenlage der Elektrodenblätter identifiziert werden, also die Position der Elektrodenblätterkanten in dem Schnittbild. Dies erfolgt erfindungsgemäß mit dem ersten CNN-System.

Die Identifikation der Elektrodenblätter erfolgt ebenso mittels speziell trainierter convolutional networks, insbesondere werden die Elektrodenblätter in dem Referenzlagenbereich 100 und auch die vorläufigen Elektrodenkantenlagen (letzteres beispielsweise mittles eines dritten CNN-Systems) identifiziert und dann sukzessive durch eine segmentweise Mustererkennung in den Bereichen L2 und L3 bzw. L4 und L5 in Richtung der Elektrodenkantenlagen robust erfasst. Die Verwendung von CNNs ist dabei besonders vorteilhaft, dass die Grauwerte innerhalb der Elektrodenblätter variieren und daher beispielsweise eine histogrammbasierte Erkennung nachteilig wäre. Die Aufgabe der Elektrodenkantenerkennung wird erfindungsgemäß mit dem ersten CNN-System vorgenommen. Die Mustererkennung kann ebenfalls über CNNs erfolgen, wobei sowohl für die beiden verschiedene Typen an Elektrodenblätter unterschiedliche CNNs zum Einsatz kommen können. Diese CNNs sind dann Teil des ersten CNN-Systems.

Um die Identifikation sicher zu gewährleisten, kann die Zahl der im ESV gestapelten Elektrodenblätter als Randbedingung vorgegeben sein.

Ziel ist es in jedem Schnittbild die Elektrodenkantenlage jedes Elektrodenblatts zu ermitteln.

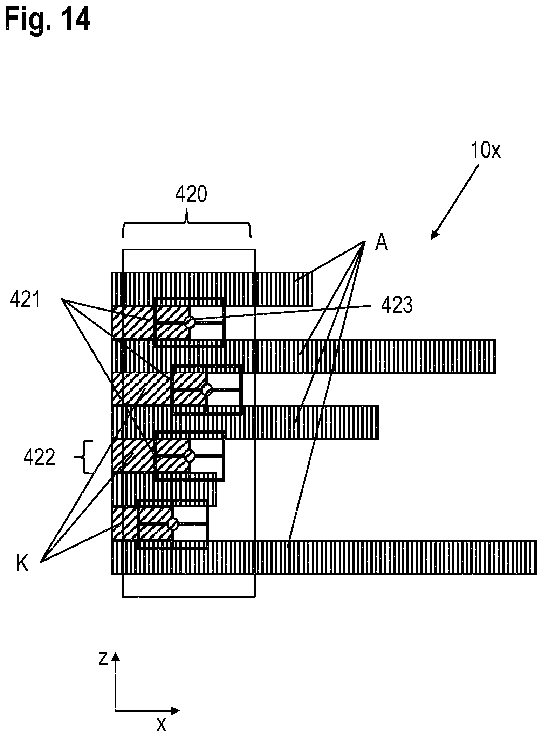

Die Musterkennung, wird beispielsweise in gleichgroßen Segmenten durchgeführt, wobei die Segmente entlang der x- bzw. y-Richtung hintereinander angeordnet sind - im Fall des xz-Schnittbilds, sind die Segmente also in Richtung der x-Achse angeordnet - dies ist insbesondere in Fig. 14 dargestellt.

Nun kann in jedem Segment in dem die Mustererkennung das Elektrodenblatt erkannt hat, eine Stützstelle, also eine Schwerpunktsposition des vorgegebenen Musters (das einem Abschnitt des Elektrodenblatts ähnelt), ermittelt werden. Dadurch werden in jeder Schnittansicht und für jedes Elektrodenblatt eine Vielzahl an Stützstellen ermittelt, entlang derer sich das Elektrodenblatt erstreckt. Durch die Stützstellen eines Elektrodenblatts kann in jedem Schnittbild ein Pfad gelegt werden, der die Stützstellen verbindet. Dies ist in Fig. 12 dargestellt. Die Stützstelle, die der Elektrodenkantelage entspricht, liegt dabei am weitesten außen vom ESV, und wird im Kontext der vorliegenden Spezifikation auch als erste Stützstelle bezeichnet.

Die Ermittlung der Stützstellen erfolgt dabei mit einem ersten CNN-System.

Für jede Elektrode im ESV und in allen xz- und yz-Schnittbildern wird jeweils die erste Stützstelle ermittelt - also die Elektrodenkantenlage.

Nun wird um eine Eckposition für jedes Elektrodenblatt zu ermitteln die erste Stützstelle und ggf. weitere Stützstellen auf Höhe der Referenzlage des jeweiligen Elektrodenblatts verlagert, und zwar so, dass der Pfad durch die Stützstellen entlang einer geraden Line entlang der x-Richtung verläuft. Als Höhe der Referenzlage dienen dabei die Stützstellen, die in dem Referenzlagenbereich 100 liegen. Aus den Positionen dieser Stützstellen kann beispielsweise eine mittlere Höhe berechnet werden. Diese Höhe entspricht dann der Höhe der Referenzlage 101 des Elektrodenblatts. Dieser Prozess ist in Fig. 12 veranschaulicht. Die verlagerte erste Stützstelle 301 und die daraus resultierende korrigierte Elektrodenkantenlage 302 ist für ein Elektrodenblatt eingezeichnet. Die korrigierte Elektrodenkantenlage 302 entspricht einer Elektrodenkantenlage für ein Elektrodenblatt, das nicht verbogen oder geknickt perfekt in Verlängerung der Referenzlage 101 ausgerichtet wäre. Insbesondere liegt diese weiter außen als die erste unkorrigierte Stützstelle. Bei dieser Transformation ist es wichtig, dass die Weglänge des Pfades durch die Stützstellen 300 unter der Transformation (also der Verlagerung der Stützstellen) konstant bleibt.

Die Stützstellen 300 können beispielsweise mittels eine kubischen splines zu einem Pfad 303 verbunden werden.

In Fig. 13 ist Lage und Anordnung der xz- und xz- Schnittbilder in einem Schnitt entlang der x-y Ebene durch einen ESV dargestellt. Die xz- und yz- Schnittbilder werden in einem Eckbereich des ESV entlang der gestrichelten Linien ermittelt. Weiterhin sind die korrigierten ersten Stützstellen für eine Anode und eine Kathode eingezeichnet.

Um nun die Eckposition der beiden Elektrodenblätter zu ermitteln, wird jeweils für jedes Elektrodenblatt für den ersten Kantenverlauf (entlang der y-Achse) und den zweiten Kantenverlauf (entlang der x-Achse) durch die korrigierten ersten Stützstellen eine Gerade vermittelt. Dabei sind im Wesentlichen nur die x-y Positionen der ersten Stützstellen relevant. Im Schnittpunkt der Geraden durch den ersten und zweiten Kantenverlauf in der x-y Ebene liegt dann erfindungsgemäß die Ecke des jeweiligen Elektrodenblatts.

Fig. 14 zeigt eine Möglichkeit die Ermittlung der vorläufigen Elektrodenkantenlage der Elektrodenblätter in anhand eines xz-Schnittbilds und für jedes darin enthaltene Elektrodenblatt.

In dem vorliegenden Beispiel, in dem der Elektrodenverbundstapel Elektrodenblätter des ersten und des zweiten Typs aufweist, kann folgende CNN-System Architektur vorteilhaft sein:
Dazu wird das in vorhergehenden Absätzen eingeführte dritte CNN-System verwendet, das in diesem Fall beispielsweise ein erstes CNN (CNN2) umfasst, das darauf trainiert ist, einen Bereich 420 des Elektrodenverbundstapel in jedem Schnittbild zu identifizieren, der die Elektrodenkantenlagen der Elektrodenblätter des zweiten Typs umfasst, also beispielsweise der kleineren Kathodenblätter. Die Identifikation richtet sich dabei insbesondere nicht auf die individuellen Elektrodenblätter, sondern dient lediglich dazu, den Bereich, in dem die Elektrodenkantelange aller Elektrodenblätter des zweiten Typs liegen, finden.

Weiterhin umfasst das dritte CNN-System ein zweites CNN (CNN5), das darauf trainiert ist, die Elektrodenkantenlage der Elektrodenblätter des zweiten Typs, in dem vom ersten CNN (CNN 2) identifizierten Bereich, zu detektieren, wobei die Elektrodenkantenlage dabei nur als vorläufiges Ergebnis behandelt wird, was mit dem Begriff "vorläufig ermittelt" zum Ausdruck gebracht wird. Um eine zuverlässige vorläufige Ermittlung zu gewähren, kann die Zahl der zu identifizierenden Elektrodenkantenlagen vorgegeben werden (z.B. implizit durch das Trainingsset oder durch eine zusätzliche Randbedingung). Durch die Einschränkung des Bereichs für die Erkennung der Elektrodenkantenlagen, wird eine erhöhte Robustheit und Zuverlässigkeit erreicht.

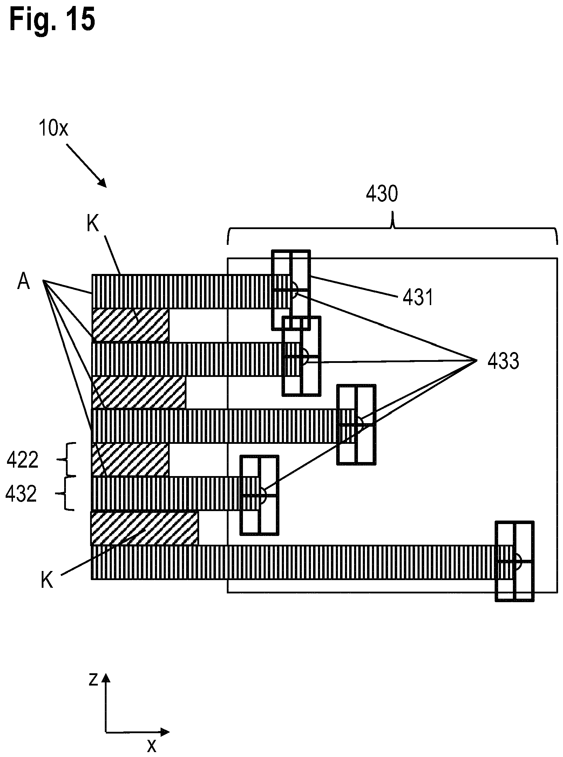

In gleicher Art und Weise werden die Elektrodenkantenlagen des ersten Typs vorläufig ermittelt. D.h. das dritte CNN-System umfasst weiterhin ein drittes CNN (CNN1), das analog zum CNN 2 in jedem Schnittbild einen Bereich 430 (vgl. Fig. 15) der Elektrodenkantenlage des ersten Typs, also bspw. der Anode A, einschließt, ermittelt. Wobei sodann in diesem Bereich ein viertes CNN (CNN4) die vorläufigen Elektrodenkantelagen 433 der Elektrodenblätter des ersten Typs vorläufig ermittelt.

Um eine zuverlässige Ermittlung zu gewähren, kann die Zahl der zu identifizierenden Elektrodenkantenlagen vorgegeben werden (z.B. implizit durch das Trainingsset oder durch eine zusätzliche Randbedingung). Durch die Einschränkung des Bereichs 420, 430 für die Erkennung der Elektrodenkantenlagen, wird eine erhöhte Robustheit und Zuverlässigkeit erreicht.

Das CNN 5 zur Ermittlung der vorläufigen Elektrodenkantenlagen der Kathoden K ist dabei insbesondere auf die Erkennung eines Features 421 trainiert, das nicht nur Bereiche der Kathoden K umfasst, sondern an den Rändern auch die Anodenblätter A umfasst (in Fig. 14 ist das Feature 421 durch einen rechteckigen Rahmen umrandet). D.h. das Feature 421 ist höher als die erwartete Kathodenblattdicke 422 im Bild, was gewährleistet, dass noch Teile der angrenzenden Anodenblätter A zur Stabilisierung beitragen können. Weiterhin ist vorgegeben, dass die Features 421 nicht überlappen bzw. sich nicht schneiden. Das Feature 421 ist im Wesentlichen rechteckig, und weist im Zentrum, die dem Feature zugewiesene Elektrodenkantenlage 423 (als Kreis gekennzeichnet) auf, die der vorläufigen Elektrodenkantenlage 423 entspricht.

Die vorläufige Elektrodenkantenlage 423 der Kathoden kann im Folgenden noch weiter präzisiert werden, bspw. mit weiteren CNNs.

In ähnlicher Weise kann die vorläufige Elektrodenkantelage mittels des CNN 4 für die Anoden A im zuvor identifizierten Bereich 430 der Anodenkanten ermittelt werden (vgl. Fig. 15). Das Feature 431, auf das das CNN4 trainiert ist, unterscheidet sich von dem Feature 421 des CNN 5. Es ist ebenfalls rechteckig aber umfasst ein anderes Muster. Auch diesem Feature 431 ist eine Position 433 zugeordnet, die der vorläufigen Kantenlage der Anode A zugeordnet wird. Die Größe (Höhe, Breite) des Features 431 spielt hierbei ein wichtige Rolle, wobei die Größe vorzugsweise so gewählt wird, dass das Feature doppelt so schmal in x- bzw. y-Richtung wie in z-Richtung ist und höher als die Anodenblattdicke 432. Die Features dürfen sich in diesem Fall überlappen. Der Kreis im Zentrum des rechteckigen Features deutet die ermittelte vorläufige Elektrodenkantenlage 433 der Anode A an.

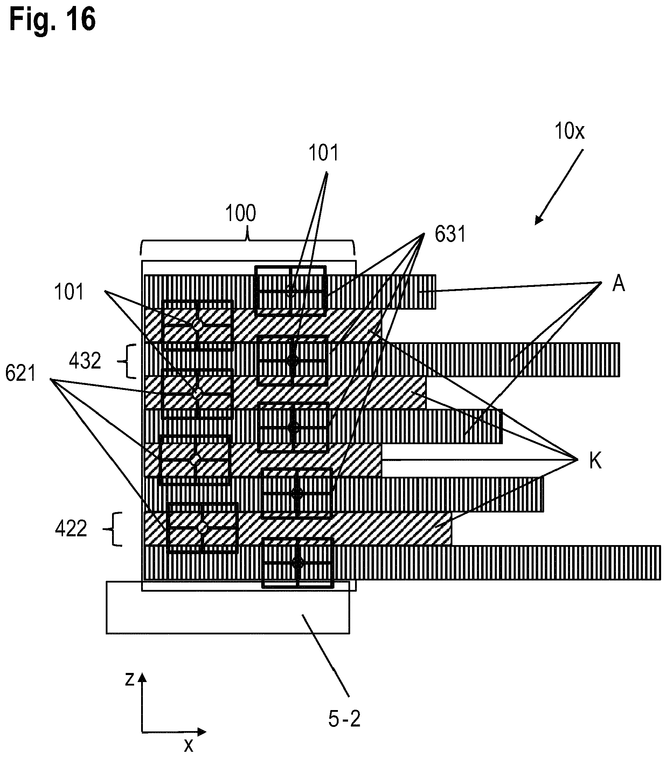

Zu Identifizierung der Elektrodenblätter im Referenzbereich 100 können wiederum andere Features und andere CNNs (CNN 6 bzw. CNN 7) verwendet werden, wobei vorteilhafter Weise die Features 621, 631 jeweils angrenzende Elektrodenblätter A, K umfassen (vgl. Fig. 16).

In diesen erkannten Merkmalen (Typ des Elektrodenblatts, Position des Elektrodenblatts im Elektrodenverbundstapel, Referenzlagenbereich, vorläufige Elektrodenkantenlagen) kann das erste CNN-System beispielsweise die erste und ggf. weitere Stützstellen 101 ermitteln, so dass ein Pfad, der die Stützstellen umfasst und verbindet und den Verlauf des Elektrodenblatts in dem Schnittbild wiedergibt, ermitteln. Insbesondere entspricht die erste Stützstelle dabei der (endgültigen) Elektrodenkantelage, also nicht mehr der vorläufig ermittelten Kantenlage 423, 433.

Die Erstellung des Pfades durch die Stützstellen kann ebenso mittels eines CNN erfolgen.

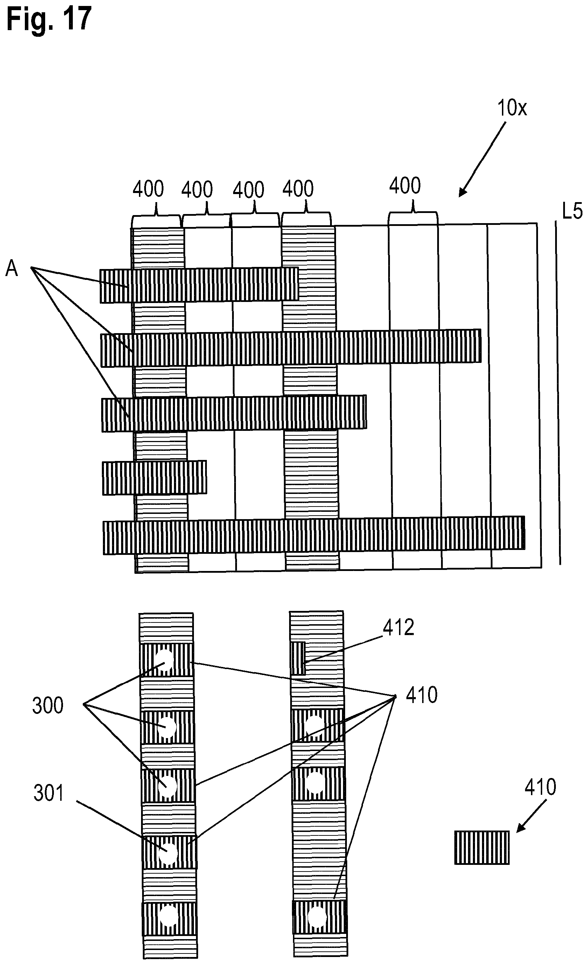

In Fig. 17 ist dargestellt, wie das erste CNN-System die Elektrodenkantenlage für die Elektrodenblätter der Anode A ermittelt.

Dazu wird beispielsweise der Bereich 430 zwischen L4 und L5, in dem ermittelt wurde, dass darin die vorläufigen Elektrodenkanten 433 der Anoden A liegen, in eine Vielzahl an Segmenten 400 unterteilt. Anschließend wird mittels eines CNNs, welches zur Merkmalserkennung des in Fig. 17 dargestellten Features 410 trainiert ist, in jedem Segment 400 nach diesem Feature gesucht. Es ist anzumerken, dass auch ein nicht horizontaler Verlauf des Anodenblatts A zuverlässig erkannt wird, da die Segmente 400 so klein gewählt sind, dass innerhalb des Segments 400 die Erscheinungsform des Elektrodenblatts nahezu unverändert ist. In dem ersten schraffierten Segment 400, erkennt das CNN von allen Anodenblättern A das korrespondierende Feature 410 und lokalisiert dieses. Der dem Feature zugeordnete Ort kann als Stützstelle 300 für das jeweilige Elektrodenblatt A verwendet werden.

Durch das zweite schraffierte Segment erstrecken sich nur noch drei Elektrodenblätter der Anode A vollständig, während ein Elektrodenblatt sich nur zum Teil 412 in das Segment 400 erstreckt. Das CNN erkennt daher nur die Elektrodenblätter mit dem vollständigen Merkmal 410.

Dem nur teilweise 412 in das Segment erstreckende Elektrodenblatt kann das vorhergehende Segment als Position der Elektrodenkante (also die Elektrodenkantenlage) zugeordnet werden, also die erste Stützstelle 301. Der Fehler dieser Zuordnung bzgl. der tatsächlichen Elektrodenkante ist vernachlässigbar und liegt aufgrund der Größe der Segmente 400 im Bereich der Lokalisierungstoleranz und ist sehr genau.

In analoger Weise werden die Kantenlagen der Kathoden K mittels eines anderen CNNs des ersten CNN-Systems ermittelt (nicht dargestellt).

Die Vielzahl der Stützstellen 300, die durch die Mustererkennung in den Segmenten 400 erfolgt, wird nun beispielsweise mittels eines spline-Pfades miteinander verbunden. Eine Länge des Pfades wird berechnet und wie oben bereits ausgeführt, wird der Pfad dann transformiert, so dass dieser entlang einer Geraden verläuft und die gleiche Länge hat. Dadurch wird ggf. die Position (Höhe und X bzw. Y-Richtung) der ersten Stützstelle 301, verändert. Diese neue Position entspricht der korrigierten Elektrodenkantenlage durch welche dann die Geraden vermittelt werden, die in Ihrem Schnittpunkt eine sehr genaue Positionierung der Ecke des Elektrodenblatts erlaubt (cf Fig. 13).

Mit dem erfindungsgemäßen Verfahren kann eine Ablagepräzision von Elektrodenblättern in einem ESV effizient und zuverlässig ermittelt werden und ggf. auch eine Korrektur bzw. Verbesserung der Ablage der Elektrodenblätter aus der ermittelten Pose der Elektrodenblätter ermittelt werden.

**Bezugszeichenliste**

| | |
|---|---|
| Drehteller | 1 |
| Haltevorrichtung | 3 |
| Träger | 5 |
| Röntgenlichtquelle | 6 |
| Detektor | 7 |
| CT-Aufnahme | 8 |
| Ableiterfahnen der Elektrodenblätter | 9 |
| xz-Schnittbild/Schnittebene | 10x |
| yz-Schnittbild/Schnittebene | 10y |
| Kantenverlauf x entlang der x-Richtung | 20x |
| Kantenverlauf entlang der y-Richtung | 20y |
| Elektrodenblattkante entlang der x-Richtung | 21x |
| Elektrodenblattkante entlang der y-Richtung | 21y |
| Referenzlagenbereich | 100 |
| Referenzlage | 101 |
| Stützstelle | 300 |
| erste Stützstelle | 301 |
| korrigierte Elektrodenkantenlage | 302 |
| Pfad | 303 |
| transformierter geradliniger Pfad | 304 |
| Segment | 400 |
| Feature/Merkmal | 410 |
| unvollständiges Feature | 412 |
| Bereich der Kathodenkanten | 420 |
| vorläufiges Kathodenkanten Feature/Merkmal | 421 |
| Kathodenblattdicke | 422 |
| vorläufige Elektrodenkantenlage der Kathode | 423 |
| Bereich der Anodenkanten | 430 |
| vorläufiges Anodenkantenfeature | 431 |
| Anodenblattdicke | 432 |
| vorläufige Elektrodenkantenlage der Anode | 433 |
| Rotationsachse | 500 |
| Rotationsachse | 501 |
| Kathodenfeature im Referenzbereich | 621 |
| Anodenfeature im Referenzbereich | 631 |
| Elektrodenblatt der Anode | A |
| Elektrodenblatt der Kathode | K |
| Ecken der Elektrodenblätter | E1, E2, E3, E4 |
| Zwei gegenüberliegende Platten des Trägers 5 | SD, SB |
| Richtungen eines Koordinatensystems | x,y |
| Richtung der Stapelrichtung, z-Achse des Koordinatensystems | z |
| Bereichsgrenzen | L1, L2,L3,L4,L5 |
| Koordinatensystem | KS |
| Zentraler Bereich | 5-1 |
| Schwach absorbierender Bereich | 5-2 |

## Patentansprüche

1. Ein Verfahren zum Ermitteln einer Position von Ecken vieleckiger Elektrodenblättern in mindestens einem Eckbereich eines Elektrodenverbundstapels (ESV), umfassend die Schritte:
- 3D-bildgebendes Aufnehmen des Eckbereichs des Elektrodenverbundstapels (ESV) in einem Aufnahmebereich mittels eines Bildgebungsverfahrens, so dass ein Datensatz erzeugt wird, der eine 3D-Lageinformation der Elektrodenblätter (A, K) in dem Eckbereich des Elektrodenverbundstapels (ESV) relativ zu einem Träger (5, SD, SB) oder einem im Aufnahmebereich angeordneten Marker umfasst,
- Aus dem Datensatz Ermittlung eines ersten und eines zweiten Kantenverlaufs (20x, 20y) der den Eckbereich einrahmenden Kanten (21x, 21y) jedes Elektrodenblatts (A,K) , wobei anhand des Kantenverlaufs (20x, 20y) eine Position der Ecke (E1, E2, E3, E4) des jeweiligen Elektrodenblatts (A,K) ermittelt wird,
- wobei der erste und zweiten Kantenverlauf (20y, 20x) mit den folgenden Schritten ermittelt wird:
∘ Erzeugen einer Vielzahl an xz- Schnittbildern (10x) und yz-Schnittbildern (10y),
∘ Identifizieren der Elektrodenblätter (A,K) in jedem xz-Schnittbild (10x) und in jedem yz-Schnittbild (10y),
∘ In jedem xz- und jedem yz-Schnittbild (10x, 10y) und für jedes identifizierte Elektrodenblatt (A,K) darin,
▪ Ermitteln eines Elektrodenblattverlauf von einem Referenzlagenbereich im Elektrodenverbundstapel bis hin zu einer Elektrodenkantenlage des Elektrodenblatts durch ein erstes neural network System,
▪ Anpassung des Elektrodenblattverlaufs, so dass sich der Elektrodenblattverlauf auf Höhe der Referenzlage (101) vom Referenzbereich bis zu einer korrigierten Elektrodenkantenlage erstreckt, wobei eine Weglänge des Elektrodenblattverlaufs unverändert bleibt,
∘ Jeweils Ermitteln einer Geraden (20x, 20y), die entlang der korrigierten Elektrodenkantenlagen (302) entlang der ersten bzw. der zweiten Kante (21x, 21y) für jedes Elektrodenblatt (A, K) verläuft, wobei die Geraden (20y, 20x) dem ersten Kantenverlauf (20y) und dem zweiten Kantenverlauf (20x) entsprechen.

2. Das Verfahren nach Anspruch 1, wobei die korrigierte Elektrodenkantenlage durch Ermittlung einer Elektrodenblattposition an einer Vielzahl von Stützstellen (301, 300) bestimmt wird, wobei eine erste Stützstelle (301) der Elektrodenkantenlage entspricht, und wobei die Referenzlage (101) des Elektrodenblatts (A,K) im Elektrodenverbundstapel (ESV) durch mindestens eine weitere Stützstelle (300) erfasst wird, wobei die Stützstellen (300, 301) durch das erste neural network System ermittelt werden, wobei die korrigierte Elektrodenkantenlage (302) durch Verlagerung zumindest der ersten Stützstelle (301) auf Höhe der Referenzlage (101) erreicht wird, wobei eine Weglänge zwischen der ersten (301) und der mindestens einen weiteren Stützstelle (300) konstant bleibt, so dass die Weglänge des Elektrodenblattverlaufs unverändert bleibt.

3. Das Verfahren nach einem der vorhergehenden Ansprüche, wobei ein Schnittpunkt (E1) des ersten und zweiten Kantenverlaufs (20y, 20x) für jedes Elektrodenblatt (A, K) ermittelt wird, wobei dem Schnittpunk (E1) die Position der Ecke des jeweiligen Elektrodenblatts (A, K) zugeordnet wird.

4. Das Verfahren gemäß einem der vorhergehenden Ansprüche, **dadurch gekennzeichnet, dass** das Verfahren für zwei oder mehr Eckbereiche der Elektrodenblätter (A, K) des Elektrodenverbundstapels (ESV) durchgeführt wird, und so die Position für zwei oder mehr Ecken (E1, E2, E3, E4) der Elektrodenblätter (A, K) bestimmt wird.

5. Das Verfahren nach einem der vorhergehenden Ansprüche, **dadurch gekennzeichnet, dass** die Elektrodenblätter (A, K) in den xz- und den yz-Schnittbildern (10x, 10y) durch ein weiteres neural network-System zum Identifizieren von Elektrodenblättern identifiziert werden.

6. Das Verfahren nach einem der vorhergehenden Ansprüche, **dadurch gekennzeichnet, dass** anhand des ersten und des zweiten korrigierten Kantenverlaufs (20y, 20x) und der Position der mindestens einen Ecke (E1) des jeweiligen Elektrodenblatts (A,K) eine Pose des jeweiligen Elektrodenblatts (A,K) bezüglich des Trägers (5) und/oder des Markers bestimmt wird.

7. Das Verfahren nach Anspruch 6, **dadurch gekennzeichnet, dass** anhand der Pose für jedes Elektrodenblatt (A,K) eine Abweichung von einer vordefinierten Pose bezüglich des Trägers (5) und/oder des Markers ermittelt wird.

8. Das Verfahren nach Anspruch 7, **dadurch gekennzeichnet, dass** anhand der ermittelten Abweichung während eines Herstellungsverfahrens für einen weiteren Elektrodenverbundstapel eine Ablagepose der Elektrodenblätter auf den Elektrodenverbundstapel angepasst wird, so dass bei dem weiteren Elektrodenverbundstapel die Abweichungen geringer ausfallen.

9. Das Verfahren nach einem der vorhergehenden Ansprüche, **dadurch gekennzeichnet, dass** für jedes Elektrodenblatt (A,K) aus der oder den ermittelten Positionen der Ecken (E1,E3), Positionen von verbleibenden Ecken (E2,E4) des jeweiligen Elektrodenblatts (A,K) bestimmt werden, die noch nicht ermittelt wurden, wobei die Bestimmung der verbleibenden Ecken aus in einer Datenbank hinterlegten Abmessungen des Elektrodenblatts erfolgt.

10. Das Verfahren nach einem der vorhergehenden Ansprüche, **dadurch gekennzeichnet, dass** die Vielzahl an Elektrodenblättern eine Vielzahl an Elektrodenblättern eines ersten Typs (A) und eine Vielzahl an Elektrodenblättern eines zweiten Typs (K) umfasst.

11. Das Verfahren nach Anspruch 9 oder 10, **dadurch gekennzeichnet, dass** die Elektrodenblätter (A) des ersten Typs einen von den Elektrodenblättern des zweiten Typs (K) verschiedenen Grauwertbereich in den Schnittbildern (10x,10y) aufweisen, so dass die Elektrodenblätter (A,K) im Datensatz anhand des verschiedenen Grauwertbereichs unterscheidbar sind.

12. Das Verfahren gemäß einem der Ansprüche 9 bis 11, **dadurch gekennzeichnet, dass** in einem ersten Bildaufbereitungsschritt ein neural network System zum Erkennen einer vorläufigen Elektrodenkantenlage der Elektrodenblätter in jedem xz- und jedem yz-Schnittbild (10x, 10y) und für jedes Elektrodenblatt die Elektrodenkantenlage der Elektrodenblätter vorläufig ermittelt, und wobei weiterhin in jedem xz- und jedem yz-Schnittbild (10x, 10y) und für jedes Elektrodenblatt die Referenzlage (101) ermittelt wird, wobei die Referenzlage (101) aus einem Bereich (100) des Elektrodenverbundstapel (ESV) ermittelt wird, in dem die Elektrodenblätter (A,K) in regelmäßigem Abstand und insbesondere lückenlos entlang der Stapelrichtung (z) aufgestapelt sind.

13. Das Verfahren nach Anspruch 12, **dadurch gekennzeichnet, dass** in einem zweiten Bildaufbereitungsschritt das erste neural network System in jedem xz- und jedem yz-Schnittbild (10x, 10y) und für jedes Elektrodenblatt (A,K) die Vielzahl der Stützstellen (300, 301) ermittelt, wobei die Ermittlung für sowohl die Elektrodenblätter des ersten Typs als auch für Elektrodenblätter des zweiten Typs jeweils auf einen Bereich eingeschränkt ist, der durch eine am weitesten in Richtung Zentrum des Elektrodenverbundstapels (ESV) gelegene vorläufig ermittelte Elektrodenkantenlage der Elektrodenblätter des ersten Typs bzw. des zweiten Typs und einer am weitesten außen gelegene vorläufig ermittelten Elektrodenkantenlage der Elektrodenblätter des ersten Typs bzw. des zweiten Typs definiert ist.

14. Das Verfahren gemäß Anspruch 13, **dadurch gekennzeichnet, dass** für jedes xz- und jedes yz-Schnittbild (10x, y10y) und für jedes Elektrodenblatt (A,K) ein Pfad (303) und eine dem Pfad zugeordnete Pfadlänge, die der Weglänge der Vielzahl der Stützstellen (300, 301) entspricht, ermittelt wird, wobei für jedes xz- und jedes yz-Schnittbild (10x, y10y) und für jedes Elektrodenblatt (A,K) die ermittelten Stützstellen (300, 301) mittels einer Transformation auf einen geraden Pfad (304) senkrecht zur Höhe (z) des Elektrodenverbundstapels (ESV) verlagert werden und zwar so, dass die Weglänge konstant bleibt, wodurch die Höhe der ersten Stützstelle (301) auf die Referenzlage (101) eingestellt wird.

15. Computer Programm umfassend Computerprogrammcode, der, wenn er auf einem Computer ausgeführt wird, das Verfahren nach einem der vorhergehenden Ansprüche ausführt.
